# EUROPEAN PATENT APPLICATION

(11) **EP 4 414 212 A1**
(43) Date of publication of application: **14.08.2024**
(21) Application number: 21963170.2
(22) Date of filing: 05.11.2021
(51) Int. Cl.: B60M 1/26, B60M 1/28

(54) **MONITORING AND MAINTENANCE SYSTEM FOR COMPENSATED OVERHEAD CONTACT LINES**

(71) Applicant: Fuenteblandor Holding, S.L., 24191 León (ES)
(72) Inventor: SUÁREZ GONZÁLEZ, Adrián, 24191 León (ES); FERNÁNDEZ LLAMAS, Camino, 24191 León (ES); GUTIÉRREZ FERNÁNDEZ, Alexis, 24191 León (ES); MATELLÁN OLIVERA, Vicente, 24191 León (ES); CASTEJÓN LIMAS, Manuel, 24191 León (ES); GONZÁLEZ ÁLVAREZ, Cesáreo, 24191 León (ES)
(74) Representative: Arsuaga Santos, Elisa
(86) International application number: PCT/ES2021/070797
(87) International publication number: WO 2023/079192

(57) **Abstract**

The present invention consists of an expert system that receives data from multiple instrumented counterweights installed in each of the compensation assemblies of each wire in the sections of the compensated or catenary overhead contact line of a railway section, line or network. The instrumented counterweight has a control unit that locally processes the data and generates certain warnings or, alternatively, the expert system processes the data and generates all the warnings. Likewise, it has an inertia sensor and a room temperature sensor and, optionally, other sensors for distance, laser, radio, ultrasound, luminosity, moisture, GPS, etc.

## Description

### FIELD OF INDUSTRIAL APPLICATION

This invention relates to overhead wire systems containing a compensation mechanism at the ends thereof, and particularly, to compensated overhead contact lines (catenary) used in trams, metros, and railways of any type, and to methods and devices for monitoring their state of operation and maintenance.

### PRIOR ART

Overhead contact line systems, also called "catenaries", provide energy to electric railway circulations, such as trains.

A typical catenary system consists of an energised conductor wire that is permanently in contact with an element of the train placed on top of the train (pantograph) and transfers to it an electric current that drives the engine of the train.

This conductor wire has a geometry that allows, on the one hand, contact with the pantograph without it encountering any obstacle due to slippage along the entire length of the railway section and, on the other hand, allows it to be suspended from a structure such as a pole, a rail (rigid catenary), a wall or a façade.

In the case of railway lines, the wire is commonly fixed to another wire referred to as "support wire" which, in turn, is fixed to the poles, etc. Depending on the characteristics of the railway, a solution in which there are two contact wires instead of one due to the current intensities that need to be supplied to the circulations from time to time can be adopted.

For the purpose of assuring a smooth sliding contact between the pantograph and the contact wire, it is very common to use mechanical compensation systems that maintain a constant voltage both over the support wire and over the contact wire(s). The most widely used compensation system on an international level is made up of pulleys and a counterweight which is fixed to the ends of the wires. In that sense, depending on changes in temperature, the counterweights ascend or descend by the proportion in which the wires are reduced or increased in length.

The counterweight can be a single piece or, more commonly, a set of weights that are arranged together to achieve the desired total weight based on the characteristics of the catenary used.

The mechanical tension that the wires can withstand, the linear weight thereof and the characteristics of the remaining elements used determines a maximum length of the wire which can be tensed. Therefore, from the mechanical operation point of view, a compensated electrified railway section is divided into independent segments from the mechanical point of view referred to as "sections", even though there is continuity from the electrical point of view.

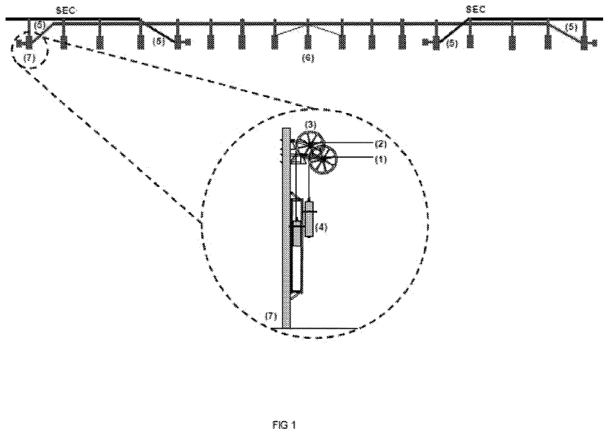

The typical length of a section is 1000 m, although there are variations depending on the layout and design characteristics. A common arrangement is illustrated in Figure 1 of the prior art, which shows a railway catenary formed by a contact wire (1) and a support wire (2) and 4 pulleys (3) with their counterweights (4) at the ends of the sections (5). In this case, each wire is compensated independently and there is a point to which the wires are fixed in the middle of the section known as the "fixed point" (6) which remains immobile, such that the displacements of the counterweights of one end are independent of (not negatively correlated with) the displacements of the counterweights of the other end.

As can be seen in Figure 1 of the prior art, the section, SEC, also comprises a series of poles (7) along which the catenary system is suspended. The length between poles (spans) is also variable depending on the system design and layout characteristics, generally being located between 15 m (trams, sharp curves) and 60 m (high speed, virtually straight sections).

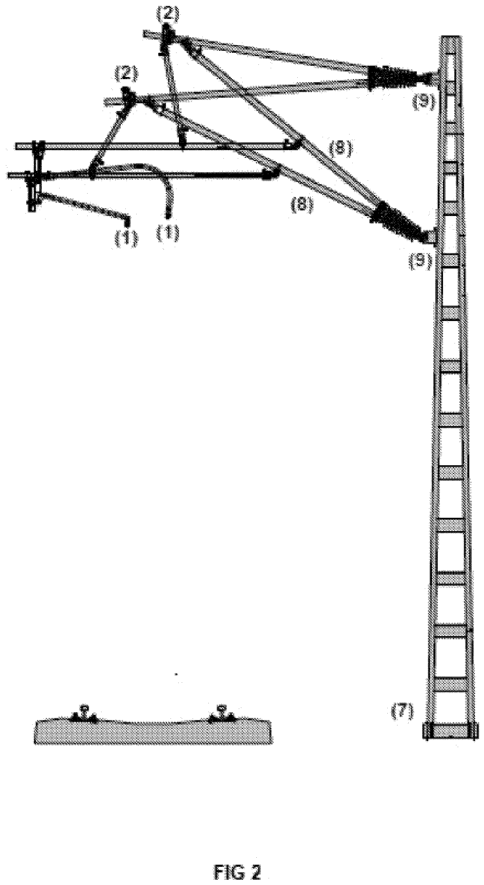

Figure 2 of the prior art shows how the contact wire and the support wire are fixed to the poles through elements referred to as cantilevered beams (8) the attachment (9) of which with the pole allows for certain rotation. Therefore, when the wires expand or contract the cantilevered beams are oriented in the direction of the counterweights (expansion) or in the opposite direction (contraction).

Compensated catenary systems are subject to multiple failure modes, such as the breakage of one of the wires or of any of the fixing elements. The pulleys or cantilevered beams may offer unsuitable resistance to movement, the wires and elements undergo a progressive mechanical wear that can unexpectedly generate a breakdown. All these failure modes may lead to an improper electrical and/or mechanical contact occurring between the contact wire and the pantograph of the train involving potentially severe consequences such as premature wear of the pantograph and of the contact wire, the interruption of railway traffic, or even the breakage and falling to the ground of the electrical wires with the subsequent risk for the safety of people.

Railway administrations endeavour to supervise and maintain catenary systems in suitable operating and conservation conditions in order to prevent those failures and their consequences. To this end, regular inspections are carried out by means of using inspection vehicles and monitoring and maintenance brigades. However, the vast majority of system defects are only noticeable when they are very obvious and therefore pose a clear danger to the integrity of railway traffic and people. This involves difficulties in implementing conditioned maintenance actions (that which is performed according to the real conditions of the assets), which would be the most effective and efficient. Therefore, at a practical level, the only possible maintenance is either planned or scheduled maintenance or corrective maintenance.

In addition, there are other failure modes that have their origin outside the catenary system itself, such as, for example, the passage of a pantograph in poor conditions which engages and drags the catenary, a tree falling on the line, very strong gusts of wind that cause damage to the system, the formation of ice, or theft or sabotage of the infrastructure.

Some of the above problems can be detected remotely through the catenary system if they are severe enough to affect the electrical performance of the system and particularly in those cases where the electrical continuity of the installation is broken. In many cases, however, the breakdown is not so clear and the incident goes unnoticed until the problem is reported by maintenance staff or a circulating train or, unfortunately, an accident occurs.

Railway administrations are therefore very interested in knowing the state of operation and conservation of their catenary systems given the adverse economic, operational and safety consequences. This has led many inventors to propose, over the last 15 years, various solutions to solve or reduce this problem.

The vast majority of the solutions proposed consist of monitoring the compensation system, either through sensors that measure the rotation of the pulleys or through sensors that measure the height of the counterweights and the room temperature. The readings obtained for the rotation or height would be compared with the expected values based on predetermined system design tables, for the given room temperature. In this way, a system failure would be detected when the height (or rotation) of the counterweight did not correspond with the height determined by the tables for said temperature.

Existing patents include a number of such patents, such as:

### ES2343726

This patent has sensing means installed on a compensation pole and a set of pulleys with integral shafts pivotably connected to the compensation pole on a hinge pin by means of a clevis, a counterweight connected to a pulley with a larger radius of the set of pulleys through a tensioning wire, the contact wire being connected to a pulley with a smaller radius of the set of pulleys, as well as a tilt sensor mounted on said clevis and a linear position sensor and a data collection module.

### ES2164517

This patent relates to a device for comparing the theoretical elongation and the actual elongation based on the elongation speed detected by a change in direction of the electrical or magnetic field in the sensors installed on the equipotential wire on both sides of the fault point, locating the faulty portion.

ES2415580

This is installed at one end of a wire, measuring the angle of the catenary with respect to the horizontal at a point on same.

It obtains the calibrated value with respect to a reference of the measured angle and temperature. The wire is fixed to the towers by means of a fixing element, said wire forming a catenary which includes an insulator, an integral fixing of the angle gauge and an angle gauge *per se.*

### US8941502

This patent consists of a safety monitoring system for a catenary system that includes an overhead wire, a support pole and a counterweight attached to the end of the overhead wire and suspended by the support pole. The catenary safety monitoring system includes a temperature sensor for detecting a room temperature, a position sensor for detecting a position of the counterweight and an electronic controller. The electronic controller compares a detected position of the counterweight with a predicted position determined by the electronic controller using a room temperature from the temperature sensor. A message transmitter provides a warning to a user if the detected position of the counterweight is not within a predetermined percentage of the predicted position.

### WQ2019047653

This patent consists of a contact network online monitoring system and a method therefor, constructing multiple distributed independent monitoring systems on a contact network along a train line, sending a monitoring signal to a nearby signal collector, and sending the signal to a monitoring management centre and a big data centre by means of a base station; the monitoring management centre analysing and processing data, issuing a monitoring command, and sending the command to a designated independent monitoring system via the base station and the signal collector. A solution monitoring status of a key operating parameter of a contact network in real time provides real-time accurate, reliable and safe monitoring of an operating status of the contact network system, and provides effective data support for smart operation and protection of the contact network; using a big data platform-based data analysis and the processing centre provides a novel contact network data analysis operation mode, implementing unification and integration of real-time data, historical data and business data, providing an effective method of implementing status maintenance for a contact network.

Unfortunately, many of the inventors have given up and, even where patents are still in force, the market has not adopted the solutions that have been proposed to date.

In the opinion of the present inventors, the reasons for which the proposed monitoring systems have not reached the market, despite the undoubted benefits they would bring to the railway network, are as follows:
▪ Difficulties in installation. Some solutions are based on fixing devices in places that are not easily accessible or require the use of special means or working conditions, such as working at heights and in areas close to live elements.
▪ Installation requires skills and knowledge that are not common for catenary line maintenance personnel, such as connection, wiring and configuration of electronic and communication devices.
▪ The operation of the devices requires calibration or verification at commissioning to ensure that the height of the counterweights recorded by the devices corresponds to the actual height. In addition, each installation has to be carefully established at each site to ensure that there is no obstacle in the field of view of the distance sensors that distorts the measurement. In a number of cases it may even be necessary to perform some type of refurbishment of the site to ensure that nothing will block the field of view in the future (vegetation growth, disturbance by other installations, etc.).
▪ The vast majority of the proposed solutions include sensors and communication modules that require very high power consumption. The high power consumption of many of the systems makes it necessary to connect the monitoring device to an external energy source which, on a number of occasions, is not available or requires an auxiliary installation that considerably increases the cost and, above all, the complexity of the system.
▪ The investment and maintenance costs of the proposed devices are of the order of magnitude or even higher than the cost of the compensation system as a whole (pulleys, counterweights and guide shafts).
▪ In any case, the information provided by the proposed devices is incomplete, given that the operating methods of the systems proposed to date only capture a small fraction of the variables that serve to determine, in a rigid and static manner, anomalous behaviour in the mechanical operation of the system. Said systems are based on comparing the heights of the counterweights with respect to the system design tables that relate the theoretical heights to the temperature of the conductors, but do not take into account other aspects, such as the fact that the temperature used is room temperature (not that of the conductors) or other environmental factors (rain, wind, etc.).

In short, the compensated catenary monitoring systems proposed to date present serious scalability problems that are decisive for the adoption of said solutions. Railway administrations have no interest in monitoring the status of a specific individual section, but rather that of their entire network, or at least a line or a section of it.

The complexity of the installation at both the operational and technical level, the problems of calibration, power supply, investment and maintenance costs, and the uncertainty about the effective value of the information generated by said devices make it unfeasible to deploy these solutions at the level of a network or a relevant part thereof.

### DESCRIPTION OF THE INVENTION

The present invention relates to an expert system that receives data from multiple instrumented counterweights installed in each of the compensation assemblies of each wire in the sections of the compensated or catenary overhead contact line of a railway section, line or network.

The instrumented counterweight has a control unit that locally processes the data and generates certain warnings or, alternatively, the expert system processes the data and generates all the warnings.

The instrumented counterweight has an inertia sensor and a room temperature sensor and, optionally, other sensors for distance, laser, radio, ultrasound, luminosity, moisture, GPS, etc.

The instrumentation can be included in a disc of the counterweight or embedded in single-frame counterweights, or it can be integrated in an enclosure which allows the fixing thereof to an existing counterweight.

It can also be integrated in an enclosure which allows the fixing thereof to the tail end of the catenary which connects the support wire or contact wire to the pulley, such that horizontal displacements instead of vertical displacements of the wires are monitored.

### BRIEF DESCRIPTION OF THE DRAWINGS

Figure 1 shows a mechanical section of a catenary.
Figure 2 shows a detail of a section pole.
Figure 3.1 shows a graph of the progression of heights of the counterweight over 24 hours. Figure 3.2 shows a graph of the progression of heights of the counterweight in relation to the temperature over 24 hours. Figure 3.2 shows a graph of the progression of the heights of the counterweight in relation to the temperature over several weeks.
Figure 4 shows the counterweight with its instruments.
Figure 5 shows a depiction of the logic of the sensors included in the counterweight and the relationship between same.
Figure 6 shows a general diagram of the invention.
Figure 7 shows a drawing in the case in which the detailed instrumentation can be embedded in single-frame counterweights, instead of in one of the discs.

### DETAILED DESCRIPTION OF AN EMBODIMENT

The proposed catenary monitoring system is based on specific knowledge that has not been taken into account in any of the consulted inventions, as well as the advantages provided by the prior art in relation to sensors, loT (the Internet of Things), LPN (low-power communications), energy harvesting, and artificial intelligence (Al), which allow approaching the solution of the problem from a perspective other than the installation of a monitoring solution in each counterweight assembly.

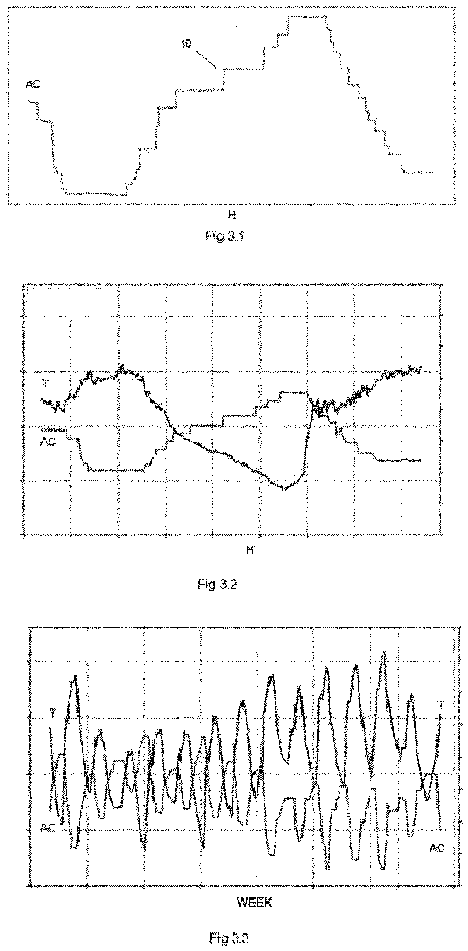

Contrary to what may be believed, the counterweights are not displaced gradually and continuously as the wires expand or contract due to the effect of temperature. Figure 3.1 depicts the variation in heights of the counterweight, AC, over 24 hours, H. In said figure, it can be seen that the displacements of the counterweights start spontaneously and last for a few seconds (10), most likely due to the inertias for the movement of the pulleys and the rotation assemblies of the cantilevered beams (among others).

As it is only necessary to record and transmit displacement readings when displacement actually occurs, this specific knowledge allows the possibility to optimise energy consumption.

Moreover, and in reference to Figure 3.2, variation in AC in relation to room temperature, T, over 24 hours, H, and to Figure 3.3, variation in relation to room temperature over several weeks, WEEK, the existence of a correlation between room temperature and displacement of the counterweights, as would be expected, can clearly be seen. The nature and characteristics of that correlation allows knowing if the system is operating correctly or if there has been some type of disturbance in its operation, but to that end it is sufficient to relate the temperature and the displacement, not the height of the counterweight above the terrain. This specific knowledge allows addressing the possibility of monitoring the installation without using distance sensors.

The compensated catenary monitoring system described herein allows: 1) monitoring the mechanical performance of the compensation system; 2) detecting and warning about performance anomalies before they give rise to incidents; and 3) detecting and warning about serious incidents in real time, such as the theft or breakage of conductors, or events such as the snagging of the catenary.

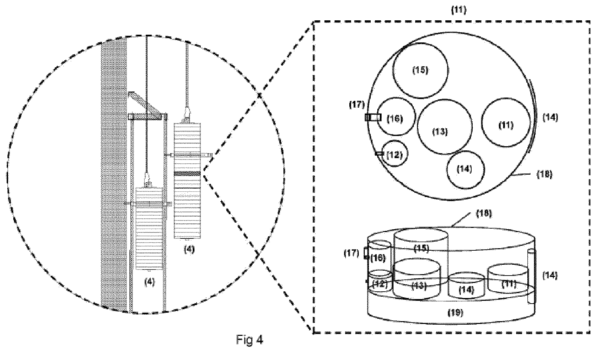

As can be seen in Figure 4, the present invention is based on an instrumented counterweight consisting of the following embedded components: an inertia sensor 1, IMU, that records the accelerations of the counterweights and is capable of remaining in a latent state and being activated when it detects movements; a room temperature sensor 12; a control unit 13, which processes the information from the sensors according to algorithms and programmable logic; an energy acquisition unit 14, a battery for energy storage with sufficient capacity to energise the device in periods in which energy 15 cannot be acquired; an LPN communications module 16; an LPN antenna 17; the enclosure 18, with a geometry and sizes similar to the remaining counterweights of the assembly and a mass with a suitable weight 19. It can be seen that the photovoltaic cells, the antenna, and the temperature sensor protrude from the enclosure, although they could be included in a recess in the enclosure so that they do not protrude.

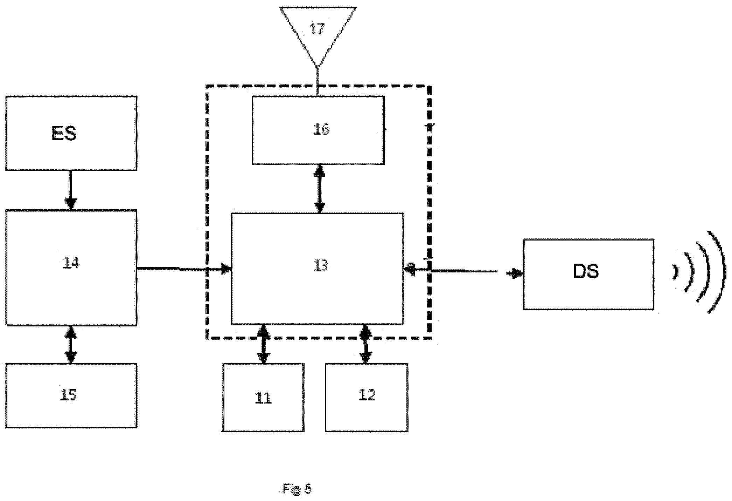

Figure 5 shows the logic relationships between the different components, where ES is the energy source that is used, for example, photovoltaic cells, and DS is a possible distance sensor, which is an accessory.

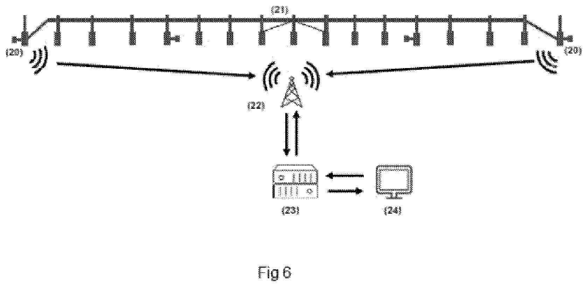

Figure 6 describes the invention as a whole, consisting of at least one (20) instrumented counterweight in each counterweight assembly of a (21) railway section, line, or networks, an LPN network (22) providing communications coverage and an (23) expert system accessible through various user interfaces (24) and with access to other data systems in use, such as the asset maintenance management system, weather information system, railway traffic management system, or traction power system. The flow chart of the expert system is the following:

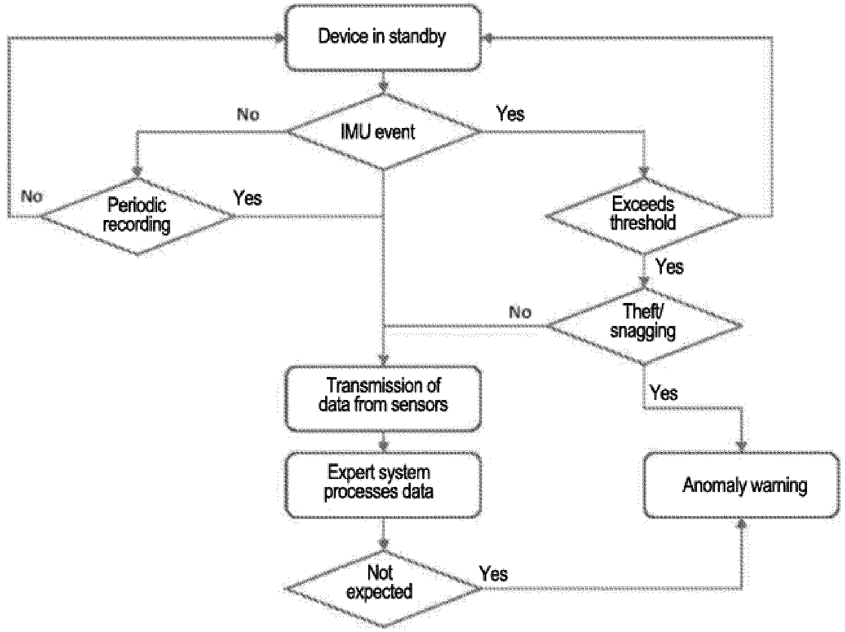

The instrumented counterweight has an operating mode such that, when movement of the counterweight is detected, the control unit processes the information about the accelerations provided by the accelerometer (for example, by means of an algorithm for integrating equations of the movement based on the recorded accelerations) to classify the movement as:
1) normal displacement of the counterweight (that would correspond with a small ascending or descending movement lasting a few seconds)
2) a theft or breakage (that would correspond with a sudden collapse of the counterweight)
3) snagging (that would correspond with an erratic displacement of the counterweight).

Once classified, it emits a telegram together with the room temperature information and the univocal device identification (ID) which is transmitted by the LPN and picked up by the expert system.

Once the information is received by the expert system, a warning is emitted to immediately notify maintenance service in the event that the telegram indicates a theft, breakage or snagging of the catenary. The device ID allows the location of the section where this has occurred to be accurately identified if said data were previously associated.

The data corresponding to an operation of the section classified as normal is integrated into a data set which can be analysed by interrogating a model that may have been pre-defined depending on the theoretical or simulated behaviour of a section or by using different data science methods. In the case of using data science methods, it would be possible to compare the actual behaviour of the section with its historical behaviour and to react to significant deviations.

The data provided by the device over a certain period of time during which the section behaviour is known to be correct is also used as learning and validation data to define the model.

Taking into account that a typical catenary line does not require a major intervention until the contact wire needs to be substituted due to wear (at least 15 years), it is perfectly possible to use the first year of the installation to capture data to build a complete seasonal model of the section.

The deployment of these devices at the network level allows models to be built both at the section level and using all the information from all the instrumented sections in the network, which could potentially improve the predictive capability of the system.

This creates a predictive model for the variation of the displacement of the counterweights, depending on the variation of the room temperature during their last movements. The sign of the temperature variation is also considered in order to reflect a possible different behaviour depending on the direction of the displacement of the conductors. In this model, a displacement of the counterweights that is sufficiently far (and perhaps not sporadic) with respect to the displacement expected according to the prediction of the model gives rise to the activation of a monitoring of the section or an intervention to check its status on the terrain.

The aforementioned data can be processed using simple statistical methods as well as learning techniques and even algorithms based on neural networks.

In short, the present invention discriminates the occurrence of certain severe incidences in the overhead contact line that can be associated with the breakage, theft in snagging of the contact wire through the accelerations of the counterweight assemblies. Furthermore, the invention provides data about the mechanical performance of the section that serves both for the construction of a predictive model of an operation under optimal conditions and for the processing of its performance in real time for the detection of deviations from the model and, therefore, allows the development of a conditioned maintenance of the catenary.

The system is scalable for deployment on a railway network because it solves the problems which are believed to have prevented the inventions proposed to date from being taken up by the market. The present device is, in appearance, a counterweight analogous to other installed counterweights: it is not an additional system and does not require any particular means or installation conditions. Catenary line personnel have the necessary skills and knowledge to install it as it is a counterweight analogous to other counterweights. The device requires no calibration or special precautions during installation.

In summary, the invention consists of an expert system that receives data from multiple instrumented counterweights installed on each of the compensation assemblies of each wire of the catenary sections of a railway section, line or network.

Each instrumented counterweight has a control unit that locally processes the data and generates certain warnings or, alternatively, the expert system processes the data and generates all the warnings.

The instrumented counterweight has, as shown in Figures 4 and 5, an inertia sensor and a room temperature sensor and, optionally, other sensors for distance (laser, radio, ultrasound), luminosity, moisture, GPS, etc.

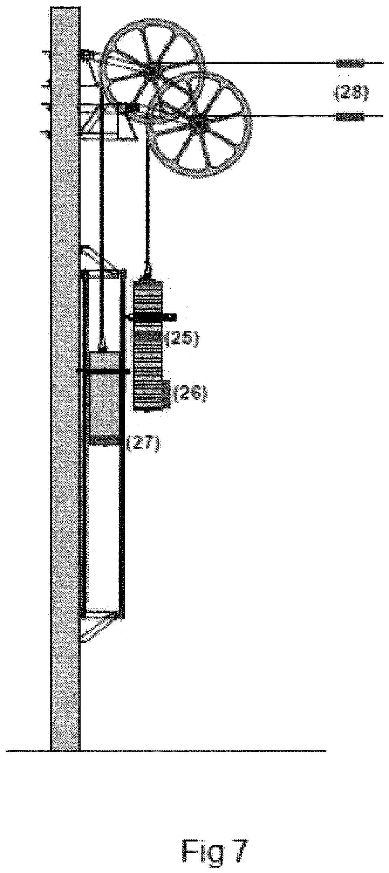

As can be seen in figure 7, the instrumentation detailed in the present invention can be embedded in single-frame counterweights (27), instead of in one of the discs (25), or it can be integrated in an enclosure that allows the fixing thereof to an existing counterweight.

It can also be integrated in an enclosure that allows the fixing thereof to the tail end of the catenary which connects the support wire or contact wire to the pulley (26), such that horizontal displacements instead of vertical displacements of the wires are monitored.

## Claims

1. A monitoring and maintenance system formed by a contact wire and a support wire and pulleys with their counterweights at the ends of the sections and connected to a control centre, **characterised by** being made up of a central expert system containing a predictive model and of a series of instrumented counterweights.

2. The monitoring and maintenance system according to claim 1, **characterised in that** the predictive model of the expert system analyses the variation in the displacement of the counterweights and the variation in room temperature during their last movements and discriminates whether there has been a breakage, theft, or snagging of the contact wire through the accelerations of the sets of counterweights.

3. The monitoring and maintenance system according to claim 2, **characterised in that** the data corresponding to an operation classified as normal of the section is integrated into a data set creating a pre-defined model depending on the theoretical, supervised, or historical behaviour of the system.

4. The monitoring and maintenance system according to claim 1, **characterised by** autonomous counterweights that can monitor its movement intrinsically, while at the same time providing the necessary data to the expert system.

5. The monitoring and maintenance system according to claim 4, **characterised in that** the instrumented counterweights contain a control unit, an inertia sensor that records the accelerations of the counterweights, a room temperature sensor, an energy acquisition unit, a battery, an LPN communications module, an LPN antenna and an enclosure, with a geometry and sizes similar to the remaining counterweights of the assembly and a mass with a suitable weight.

6. The monitoring and maintenance system according to claim 4, **characterised in that** the instrumentation of the counterweights can be embedded in the disc or have flanges.

7. The monitoring and maintenance system according to claim 4, **characterised in that** the counterweights can be embedded in single-frame counterweights or be fixed to the tail end of the catenary.

8. The monitoring and maintenance system according to claim 5, **characterised in that** additional sensors for GPS, illumination, distance, etc., can be added to the instrumented counterweights.
